# FASCICULE DE BREVET EUROPEEN

(11) **EP 3 329 810 B1**
(45) Date de publication et mention de la délivrance du brevet: **11.09.2019**
(21) Numéro de dépôt: 17204704.5
(22) Date de dépôt: 30.11.2017
(51) Int. Cl.: A47J 27/08, A47J 27/09

(54) **AUTOCUISEUR A BAIONNETTE ET VERROU MOBILE**
SCHNELLKOCHTOPF MIT BAJONETTVERSCHLUSS UND MOBILEM VERSCHLUSS
PRESSURE COOKER WITH BAYONET AND MOBILE LOCK

(30) Priorité: 02.12.2016 FR 1661864
(43) Date de publication de la demande: 06.06.2018
(73) Titulaire: SEB S.A., 69130 Ecully (FR)
(72) Inventeur: CHAMEROY, Eric, 21260 VERONNES (FR); ROUSSARD, Philippe, 73340 LE NOYER (FR); RHETAT, Eric, 21000 DIJON (FR); JULIEN, Guillaume, 21000 DIJON (FR)
(74) Mandataire: Weber, Jean-François

(56) Documents cités:
- EP-A1- 3 072 423
- DE-U1- 9 401 093
- US-A1- 2014 339 223

## Description

La présente invention se rapporte au domaine technique général des appareils de cuisson d'aliments sous pression, et en particulier aux appareils domestiques du genre autocuiseurs destinés à former une enceinte de cuisson capable de monter en pression afin d'assurer la cuisson sous pression de vapeur des aliments contenus en son sein.

Le document DE 94 01 093 U montre un tel appareil de cuisson.

La présente invention concerne plus particulièrement un appareil de cuisson d'aliments sous pression comportant une cuve, un couvercle indépendant de la cuve, ainsi qu'un système de verrouillage à baïonnette conçu pour passer d'une configuration de déverrouillage à une configuration de verrouillage par pivotement du couvercle relativement à la cuve, ledit appareil comprenant également un élément de sécurité fixé au couvercle pour se déplacer avec ce dernier à pivotement relativement à la cuve.

Les appareils de cuisson d'aliments sous pression, en particulier à usage domestique, sont bien connus. Ils comprennent généralement une cuve métallique sur laquelle est destiné à être rapporté de manière étanche, par l'intermédiaire d'une garniture souple d'étanchéité annulaire, un couvercle lui aussi métallique, de manière à constituer une enceinte de cuisson capable de monter en pression. Le couvercle est destiné à être lié à la cuve par l'intermédiaire de moyens de verrouillage permettant à l'autocuiseur d'évoluer entre une configuration de verrouillage du couvercle relativement à la cuve, dans laquelle l'enceinte de cuisson est capable de monter en pression, et une configuration de déverrouillage dans laquelle le couvercle peut être librement séparé de la cuve. Il existe différents types de moyens de verrouillage bien connus dans l'art antérieur. L'un des systèmes les plus répandus est le système de verrouillage à baïonnette, qui repose sur la mise en oeuvre de rampes de cuve et de couvercle destinées à venir en appui mutuel après rotation du couvercle pour assurer ainsi une liaison mécanique de retenue empêchant la séparation de la cuve et du couvercle sous l'effet de la montée en pression. Les rampes de couvercle sont classiquement réalisées par repliement localisé vers l'intérieur du bord tombant annulaire du couvercle, tandis que les rampes de cuve sont quant à elles obtenues classiquement par repliement et découpe du bord supérieur libre de la cuve.

Les autocuiseurs à baïonnette connus sont habituellement équipés de poignée de cuve et de couvercle qui sont décalés angulairement lorsque le couvercle est rapporté sur la cuve en vue de son verrouillage, puis parcourent une course angulaire relative prédéterminée jusqu'à venir en alignement mutuel vertical une fois la position de verrouillage atteinte. Afin de sécuriser l'utilisation de l'appareil, il est connu de pourvoir les poignées de cuve et de couvercle d'éléments complémentaires de verrouillage destinés à coopérer mécaniquement lorsque les poignées sont alignées pour assurer un interverrouillage desdites poignées entre elles, en vue d'empêcher toute ouverture intempestive de l'appareil lorsque ce dernier est sous pression.

Ces appareils connus donnent globalement satisfaction, mais n'en présentent pas moins différents inconvénients, notamment en matière de praticité, d'ergonomie et de sécurité d'utilisation.

En particulier, la conception des autocuiseurs connus fait qu'il est difficile, sinon impossible, pour l'utilisateur d'identifier aisément les moyens d'interverrouillage portés par les poignées de cuve et de couvercle et de discerner leur mode de coopération mécanique. Ces appareils connus sont donc d'une utilisation peu intuitive. Les autocuiseurs connus ne permettent notamment pas à l'utilisateur de déterminer immédiatement, en un coup d'oeil, si le couvercle est en position de pré-verrouillage ou de verrouillage, et si les poignées sont interverrouillées ou non.

L'invention se propose par conséquent de remédier aux différents inconvénients exposés précédemment et de proposer un nouvel appareil de cuisson d'aliments sous pression qui tout en étant léger, simple et peu coûteux à fabriquer, est d'une utilisation particulièrement facile et intuitive, tout en présentant un niveau de sécurité amélioré.

Un autre objet de l'invention vise à proposer un nouvel appareil de cuisson d'aliments sous pression de construction particulièrement simple et fiable.

Un autre objet de l'invention vise à proposer un nouvel appareil de cuisson d'aliments sous pression particulièrement sûr.

Un autre objet de l'invention vise à proposer un nouvel appareil de cuisson d'aliments sous pression très ergonomique.

Un autre objet de l'invention vise à proposer un nouvel appareil de cuisson d'aliments sous pression qui peut être commandé manuellement de façon particulièrement simple et fiable.

Un autre objet de l'invention vise à proposer un nouvel appareil de cuisson d'aliments sous pression qui facilite le bon positionnement du couvercle sur la cuve lors de l'accostage du couvercle sur la cuve en vue du verrouillage.

Un autre objet de l'invention vise à proposer un nouvel appareil de cuisson d'aliments sous pression qui permet à l'utilisateur d'identifier en un coup d'oeil si l'appareil est verrouillé ou non.

Un autre objet de l'invention vise à proposer un nouvel appareil de cuisson d'aliments sous pression particulièrement compact et robuste.

Un autre objet de l'invention vise à proposer un nouvel appareil de cuisson d'aliments sous pression dont la conception limite le risque de voir le couvercle échapper à la prise de l'utilisateur.

Les objets assignés à l'invention sont atteints à l'aide d'un appareil de cuisson d'aliments sous pression comportant une cuve, un couvercle indépendant de la cuve, ainsi qu'un système de verrouillage à baïonnette conçu pour passer d'une configuration de déverrouillage à une configuration de verrouillage par pivotement du couvercle relativement à la cuve, ledit appareil comprenant également un élément de sécurité fixé au couvercle pour se déplacer avec ce dernier à pivotement relativement à la cuve, ledit appareil étant caractérisé en ce que ledit élément de sécurité comprend un corps principal attaché de façon fixe au couvercle, ainsi qu'un verrou monté mobile radialement relativement audit corps principal entre d'une part une position déployée dans laquelle ledit verrou déborde radialement à la fois dudit couvercle et dudit corps principal et d'autre part une position escamotée dans laquelle ledit verrou est rétracté vers l'intérieur du couvercle, de façon que dans l'une desdites positions déployée et escamotée, ledit verrou engage, lorsque ledit système de verrouillage est en configuration de verrouillage, une conformation complémentaire de verrouillage portée par la cuve, tandis que dans l'autre desdites positions déployée et escamotée, ledit verrou se dégage de ladite conformation complémentaire de verrouillage.

D'autres particularités et avantages de l'invention apparaîtront et ressortiront plus en détails à la lecture de la description faite ci-après, en référence aux dessins annexés, donnés à titre d'exemples purement illustratifs et non limitatifs, dans lesquels :
- La figure 1 illustre, selon une vue en perspective schématique, un appareil de cuisson d'aliments sous pression à verrouillage à baïonnette conforme à un premier mode de réalisation de l'invention, et dont le couvercle se trouve dans une position prédéterminée de pré-verrouillage.
- La figure 2 est une vue schématique en perspective de dessous du couvercle de l'appareil de la figure 1.
- La figure 3 est une vue schématique en perspective de dessus de la cuve de l'appareil des figures 1 et 2.
- La figure 4 est une vue de dessus du couvercle de la figure 2.
- La figure 5 est une vue de côté du couvercle des figures 2 et 4.
- La figures 6 est une vue identique à celle de la figure 5 à la différence près que la traverse en matière plastique équipant le couvercle est représentée transparente afin de permettre un accès visuel au mécanisme de commande du verrou monté dans la traverse.
- La figure 7 est identique à la figure 6 à la différence près que le verrou se trouve dans sa position escamotée.
- La figure 8 est une vue de dessus de l'appareil de la figure 1 dans sa configuration de pré-verrouillage.
- La figure 9 illustre, selon une vue en coupe, un détail de l'appareil de cuisson dans sa configuration de pré-verrouillage illustrée aux figures 1 et 8.
- La figure 10 illustre, selon une vue schématique en perspective, l'appareil de cuisson de la figure 1 dont le couvercle se trouve cette fois dans une position prédéterminée de verrouillage relativement à la cuve.
- La figure 11 illustre, selon une vue de dessus, l'appareil de la figure 10 en configuration de verrouillage.
- La figure 12 illustre, selon une vue schématique en perspective, un détail de réalisation agrandi de l'appareil des figures 10 et 11 en configuration de verrouillage.
- La figure 13 illustre, selon une vue schématique en perspective, l'appareil des figures 10 à 12 en configuration de verrouillage, dont le couvercle est représenté en transparence partielle afin de visualiser la coopération de verrouillage des rampes de cuve et de couvercle.
- La figure 14 est une vue schématique en coupe d'un détail de réalisation de l'autocuiseur des figures 10 à 13 en configuration de verrouillage.
- La figure 15 est une vue schématique en coupe d'un autre détail de réalisation de l'autocuiseur des figures 10 à 14.
- La figure 16 illustre, selon une vue schématique en perspective, un appareil de cuisson sous pression conforme à un deuxième mode de réalisation de l'invention, et dont le couvercle se trouve dans une position prédéterminée de pré-verrouillage relativement à la cuve.
- La figure 17 illustre, selon une vue de dessus, l'appareil de cuisson sous pression de la figure 16.
- La figure 18 illustre, selon une vue en schématique en perspective de dessous, le couvercle de l'appareil des figures 16 et 17, avec le verrou en position déployée.
- La figure 19 illustre, selon une vue en schématique en perspective de dessous, le couvercle de la figure 18, avec le verrou en position escamotée.
- La figure 20 illustre, selon une vue schématique en perspective de dessus, l'appareil des figures 16 à 19 avec son couvercle dans une position prédéterminée de verrouillage relativement à la cuve.
- La figure 21 illustre, selon une vue de dessus, l'appareil de la figure 20 en configuration de verrouillage.

Comme illustré aux figures, l'invention concerne un appareil de cuisson 1 d'aliments sous pression, destiné à assurer la cuisson de différents aliments à un niveau de pression supérieur à la pression atmosphérique, en présence de vapeur, et par exemple de vapeur d'eau. Ladite vapeur est générée par le chauffage, au sein de l'appareil 1 et en présence des aliments, d'un liquide de cuisson, par exemple un liquide aqueux. L'appareil 1 selon l'invention est préférentiellement destiné à un usage domestique, étant entendu toutefois que l'invention peut également concerner des appareils professionnels ou semi-professionnels. L'appareil 1 est de préférence conçu pour monter en pression exclusivement sous l'effet d'une source de chauffe (embarquée ou externe), sans apport de pression externe. L'appareil 1 conforme à l'invention est avantageusement conçu pour être soumis à une source de chauffe externe, comme par exemple une plaque de cuisson. L'appareil 1 de cuisson d'aliments sous pression constitue donc un autocuiseur, destiné préférentiellement à être disposé sur une source de chauffe indépendante (par exemple une plaque de cuisson) pour en chauffer le contenu. L'appareil de cuisson 1 conforme à l'invention comporte au moins une cuve 2 formant récipient de cuisson, destinée à accueillir les aliments à cuire et présentant en l'espèce sensiblement une symétrie de révolution selon un axe vertical central X-X', lequel s'étend selon une direction qui s'apparente à la direction verticale lorsque l'appareil 1 est en fonctionnement normal, c'est-à-dire repose sur un plan horizontal. La cuve 2 est de manière classique fabriquée à partir d'un matériau métallique tel que l'acier inoxydable ou l'aluminium. La cuve 2 comprend un fond 2A, qui est par exemple un fond thermo-conducteur multicouches. La cuve 2 comprend également une paroi latérale annulaire 2B qui s'élève entre ledit fond 2A et un bord supérieur libre 2C, qui est en l'espèce de forme circulaire, et qui délimite une ouverture d'accès à l'intérieur de la cuve 2. La conformation de ce bord supérieur libre 2C sera décrite plus en détails dans ce qui suit, en relation avec les moyens de verrouillage de l'appareil 1. Comme illustré aux figures, la cuve 2 est munie d'au moins une poignée de cuve 3 qui forme une excroissance locale s'étendant radialement (en l'espèce relativement à l'axe central X-X') à partir de la cuve 2, et plus précisément à partir de la face externe de la paroi latérale annulaire 2B, vers l'extérieur de la cuve 2, et de préférence au voisinage du bord supérieur libre 2C. Ainsi, comme illustré aux figures, la poignée de cuve 3 est fixée à ladite cuve 2 de façon à faire saillie extérieurement de cette dernière et former ainsi une prise destinée à être attrapée manuellement par l'utilisateur pour manipuler la cuve 2 (par exemple pour la soulever et la déplacer). Dans les modes préférentiels de réalisation illustrés aux figures, l'appareil de cuisson 1 comprend deux poignées identiques 3, 4 attachées à la paroi latérale 2B de la cuve 2 de façon diamétralement opposée par rapport à l'axe central X-X', lesdites poignées 3, 4 étant en l'espèce disposées à proximité du bord supérieur libre 2C de la cuve 2. Il est toutefois parfaitement envisageable que la cuve 2 ne soit munie que d'une seule poignée de cuve 3, ou de plus de deux poignées de cuve (par exemple trois ou quatre), sans pour autant que l'on sorte du cadre de l'invention.

L'appareil 1 conforme à l'invention comporte également un couvercle 5 destiné à être associé à la cuve 2 et verrouillé relativement à cette dernière pour former une enceinte de cuisson apte à monter en pression, c'est-à-dire une enceinte de cuisson suffisamment hermétique pour permettre la montée en pression de l'appareil 1. Afin d'obtenir ce caractère hermétique, étanche, l'appareil 1 inclut avantageusement une garniture d'étanchéité 6, formée de préférence par un joint annulaire souple, en élastomère par exemple, destinée à être interposée entre le couvercle 5 et la cuve 2, pour empêcher ainsi toute fuite incontrôlée de vapeur et/ou d'air entre l'intérieur de l'enceinte et l'extérieur. Le couvercle 5 est de manière classique fabriqué à partir d'un matériau métallique tel que l'acier inoxydable ou l'aluminium. Il présente avantageusement une forme conjuguée à celle de la cuve 2, par exemple une forme globalement discoïde, qui s'étend avantageusement dans un plan moyen sensiblement parallèle au plan moyen d'extension du fond 2A de la cuve 2 (c'est-à-dire un plan sensiblement horizontal en l'espèce) lorsqu'il est rapporté et verrouillé sur cette dernière. Comme illustré aux figures, le couvercle 5 est indépendant de la cuve 2, c'est-à-dire qu'il n'est pas attaché de façon permanente à ladite cuve 2 dont il est totalement distinct, et qu'il peut ainsi être librement associé ou séparé de la cuve 2 par l'utilisateur (en l'absence de verrouillage bien entendu).

Dans les modes de réalisation illustrés aux figures, le couvercle 5 inclut un élément de couverture discoïde 5A de forme et dimensions conjuguées à celles de l'ouverture d'accès délimitée par le bord supérieur libre 2C de la paroi latérale annulaire 2B de la cuve 2. Dans ces modes de réalisation, le couvercle 5 inclut également avantageusement une ceinture annulaire 5B, par exemple de forme sensiblement cylindrique ou tronconique, qui s'élève entre un bord supérieur circulaire solidaire de l'élément de couverture discoïde 5A (en l'espèce au niveau de la périphérie de ce dernier) et un bord inférieur circulaire libre, lequel est par exemple lui-même prolongé par une collerette terminale. Comme illustré aux figures, l'élément de couverture discoïde 5A s'étend globalement selon un plan moyen horizontal, c'est-à-dire en l'espèce parallèle au plan moyen d'extension du fond 2A de la cuve 2 lorsque le couvercle 5 est associé à la cuve 2 pour former l'enceinte de cuisson, tandis que la ceinture annulaire 5B s'étend sensiblement verticalement, c'est-à-dire parallèlement à l'axe central X-X', la collerette terminale s'étendant quant à elle sensiblement horizontalement. Cela n'exclut bien entendu aucunement que l'élément de couverture discoïde 5A puisse être, tel qu'illustré aux figures, légèrement bombé ou incurvé localement, afin par exemple d'accueillir un mécanisme de commande ou pour des raisons de tenue mécanique. Dans les modes de réalisation illustrés aux figures, la ceinture annulaire 5B est formée par un bord tombant qui s'étend vers le bas à partir de la périphérie de l'élément de couverture discoïde 5A.

Dans ces modes de réalisation, le couvercle 5 est destiné à venir coiffer de façon sensiblement ajustée le sommet de la cuve 2, de sorte que la ceinture annulaire 5B entoure par l'extérieur le sommet de la paroi latérale annulaire 2B et le bord supérieur libre 2C, tandis que l'élément de couverture discoïde 5A repose en appui sur le bord libre 2C, par l'intermédiaire du joint d'étanchéité 6 interposé entre la cuve 2 et le couvercle 5. Il est cependant parfaitement envisageable que la ceinture annulaire 5B soit alternativement destinée à être insérée au sein de la cuve 2, de façon à être entourée par, et contenue dans, la cuve 2, sans pour autant que l'on sorte du cadre de l'invention.

Afin de maîtriser la pression de cuisson, l'appareil 1 comprend avantageusement un moyen de régulation de pression 8, comme par exemple une soupape de régulation. Ladite soupape de régulation de pression est montée de préférence sur le couvercle 5, de façon par exemple à être portée directement par ledit couvercle 5 et agencée pour maintenir la pression régnant dans l'enceinte de cuisson à une valeur prédéterminée sensiblement constante, dite pression de fonctionnement, laquelle excède la pression atmosphérique d'une valeur qui est comprise par exemple entre sensiblement 10 et 120 kPa, ou par exemple entre 50 et 55 kPa, ou entre 85 et 90 kPa, ou qui est par exemple de l'ordre de 65 kPa, ou de l'ordre de 100 kPa. Le principe de fonctionnement général d'un tel moyen de régulation de pression est bien connu en tant que tel, de sorte qu'il n'est pas nécessaire de le décrire plus avant ici. L'appareil 1 de cuisson d'aliments sous pression comporte avantageusement d'autres organes de fonctionnement (par exemple un moyen de sécurité à l'ouverture 21 qui sera décrit plus en détails dans ce qui suit, une soupape de sécurité à la surpression, etc.).

L'appareil 1 conforme à l'invention comporte également un système de verrouillage à baïonnette, afin de permettre à l'enceinte de cuisson formée par l'association du couvercle 5 et de la cuve 2 d'atteindre au moins la pression de fonctionnement susvisée sans risque de voir le couvercle 5 échapper sous l'effet de la pression régnant au sein de l'enceinte. En d'autres termes, le système de verrouillage est conçu pour assurer une liaison mécanique entre la cuve 2 et le couvercle 5 qui soit suffisamment robuste pour empêcher le couvercle 5 de se séparer de la cuve 2 sous l'effet de la montée en pression au sein de l'enceinte de cuisson.

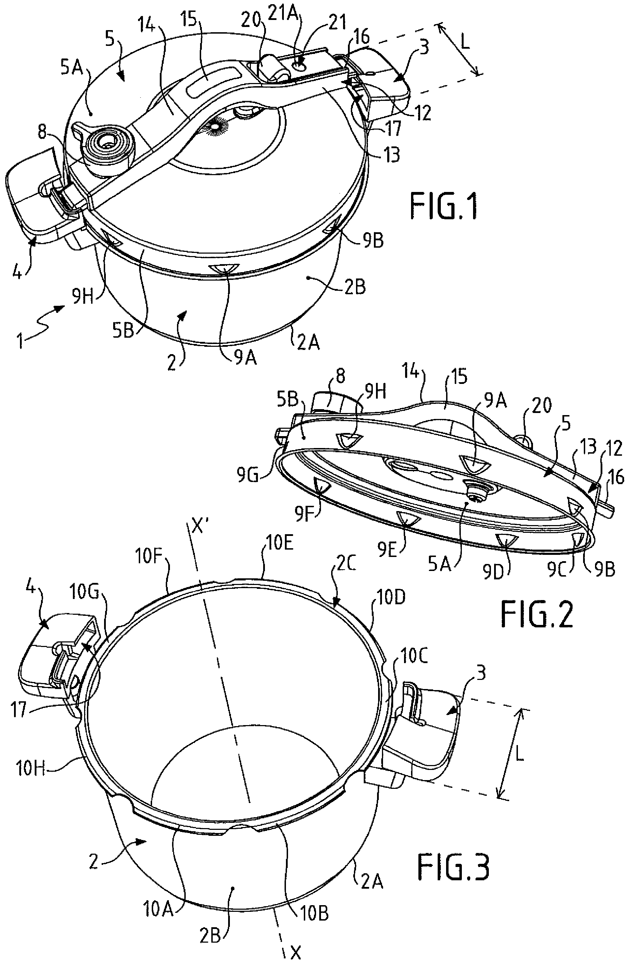

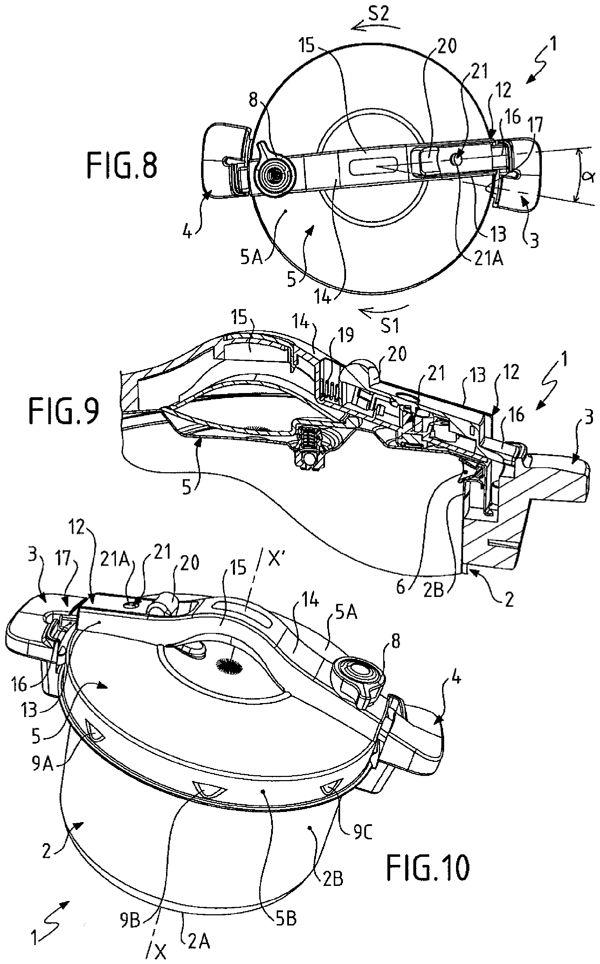

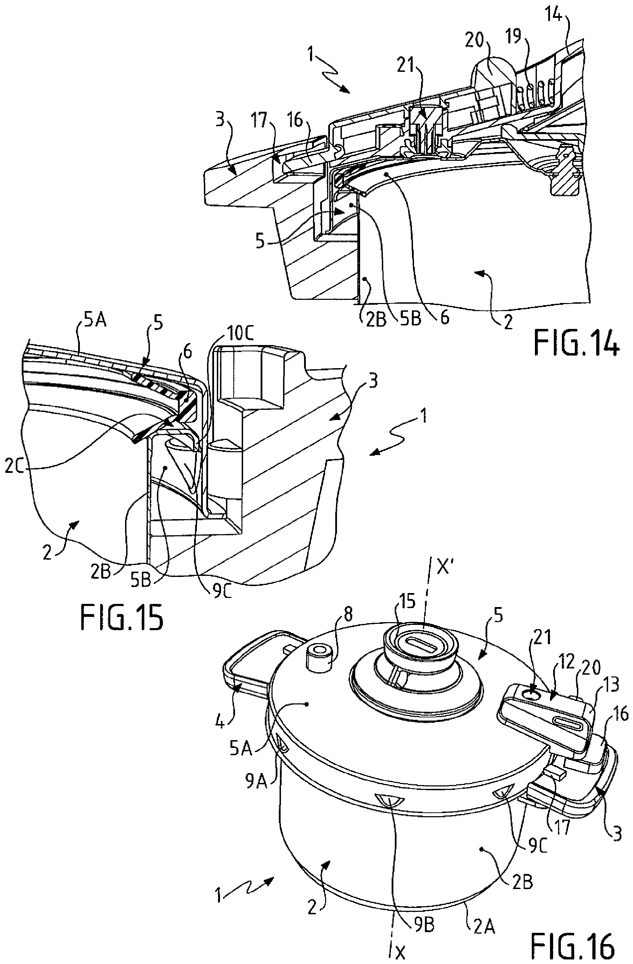

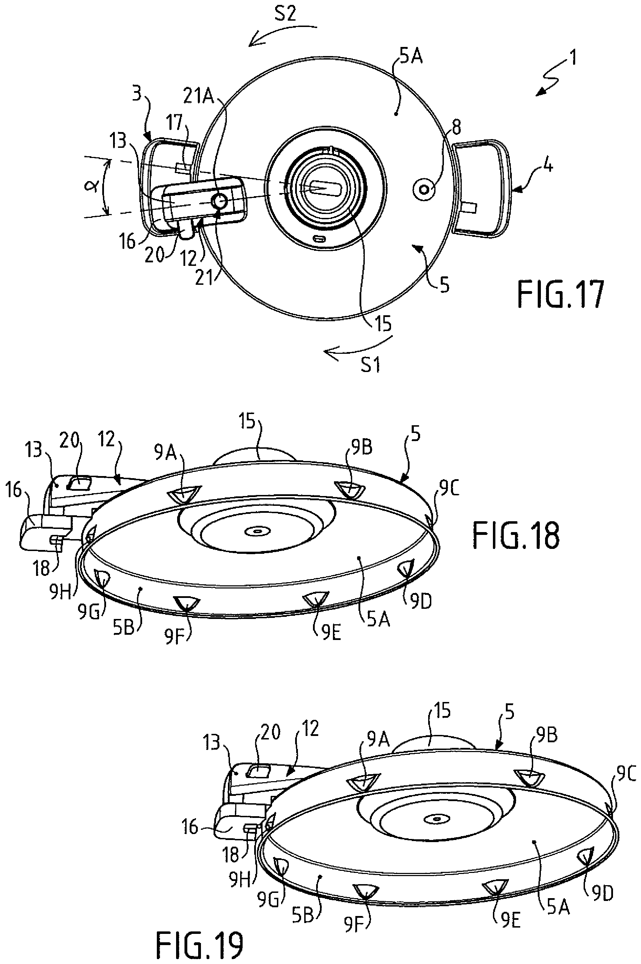

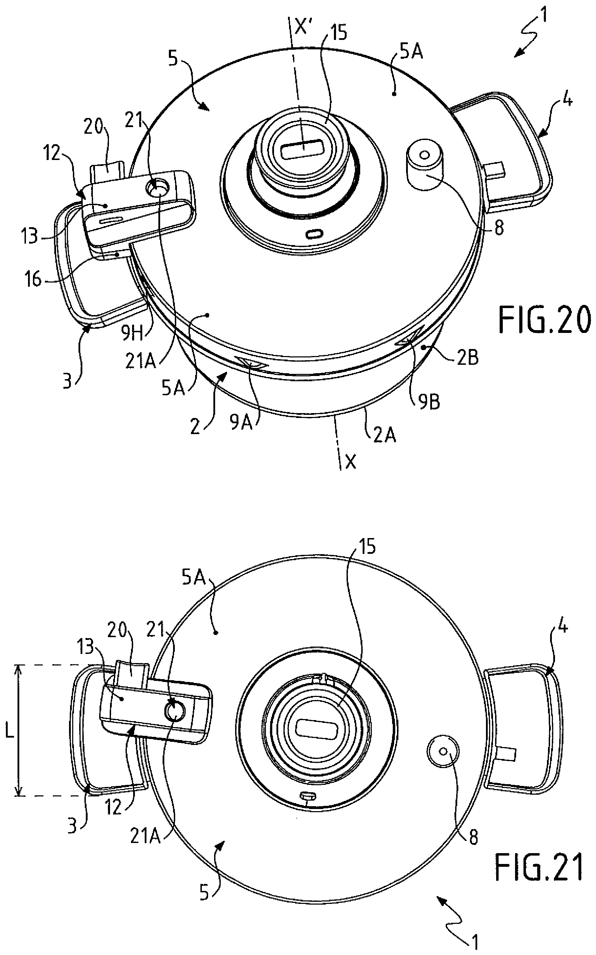

En l'espèce, le système de verrouillage à baïonnette est conçu pour passer d'une configuration de déverrouillage (illustrée aux figures 1, 8, 16 et 17) à une configuration de verrouillage (illustrée aux figures 10 à 14, 20 et 21) par pivotement du couvercle 5 relativement à la cuve 2, autour en l'espèce dudit axe vertical central X-X', pour faire ainsi passer l'appareil 1 d'une configuration d'attente de verrouillage, dans laquelle le couvercle 5 est rapporté sur la cuve 2 et repose librement sur cette dernière (figures 1 et 16) à une configuration de verrouillage dans laquelle la cuve 2 et le couvercle 5 interagissent pour empêcher leur libre séparation (figures 10 et 20), et inversement. La configuration de déverrouillage est avantageusement la seule configuration dans laquelle le couvercle 5 peut à la fois (i) être librement et immédiatement séparé de la cuve (sans rotation préalable) et (ii) atteindre sa configuration de verrouillage par pivotement du couvercle 5 relativement à la cuve 2. Cela signifie en particulier que dès que le système de verrouillage se trouve en dehors de la configuration de déverrouillage, alors l'une et/ou l'autre des conditions (i) et (ii) susvisées n'est pas remplie. De préférence, le système de verrouillage à baïonnette de l'appareil 1 selon l'invention est conçu pour passer de sa configuration de déverrouillage à sa configuration de verrouillage par pivotement du couvercle 5 relativement à la cuve 2 selon une course angulaire α prédéterminée à partir d'une position prédéterminée de pré-verrouillage du couvercle 5 relativement à la cuve 2 (illustrée aux figures 1 et 17), pour amener le couvercle 5 dans une position prédéterminée de verrouillage relativement à la cuve 2 (illustrée aux figures 10 et 20).

Ainsi, dans les modes de réalisation illustrés aux figures, l'appareil 1 passe de sa configuration d'attente de verrouillage (correspondant à la position de pré-verrouillage du couvercle 5) à sa configuration de verrouillage (correspondant à la position de verrouillage du couvercle 5) par rotation du couvercle 5 relativement à la cuve 2 selon ladite course angulaire prédéterminée α autour de l'axe central X-X', dans un sens horaire S1, et passe de sa configuration de verrouillage à sa configuration d'attente de verrouillage par rotation du couvercle 5 relativement à la cuve 2 selon ladite course angulaire prédéterminée α autour de l'axe central X-X' dans un sens antihoraire opposé S2, étant entendu que l'inverse est tout à fait possible sans que l'on sorte du cadre de l'invention (sens S1 antihoraire et sens S2 horaire). Le système de verrouillage à baïonnette de l'appareil de cuisson 1 comprend avantageusement à cet effet des première et deuxième séries d'excroissances 9A-9H, 10A-10H qui sont solidaires respectivement du couvercle 5 et de la cuve 2 et qui sont conçus, afin d'assurer le verrouillage et le déverrouillage du couvercle 5 relativement à la cuve 2, pour venir s'engager, respectivement se dégager, mutuellement par rotation du couvercle 5 relativement la cuve 2 autour de l'axe vertical central X-X' selon ladite course angulaire prédéterminée a.

Comme cela est bien connu en tant que tel, les excroissances 9A-9H, 10A-10H de chacune desdites première et deuxième séries sont destinées à coopérer deux à deux, c'est-à-dire que chaque excroissance de l'une desdites séries est amenée, par rotation du couvercle 5 relativement à la cuve 2, à passer sous une excroissance correspondante de l'autre série pour verrouiller le couvercle 5 relativement la cuve 2.

Dans les exemples illustrés aux figures, chaque excroissance 9A-9H de couvercle est constituée par un élément en volume obtenu par une déformation volumique locale de la matière constitutive de l'enveloppe du couvercle 3, et plus précisément de la ceinture annulaire 5B le long de laquelle sont de préférence disposée, à intervalles réguliers ou non, les excroissances 9A-9H. Chaque excroissance 9A-9H forme ainsi une protubérance, qui vient de matière avec la ceinture annulaire 5B et qui fait saillie de ladite ceinture annulaire en définissant d'un côté une face intérieure convexe et de l'autre côté, en *« négatif* », une face extérieure concave opposée correspondant par exemple à l'empreinte d'application d'un outil de formage, de préférence un outil d'emboutissage. L'invention n'est cependant absolument pas limitée à la mise en oeuvre d'excroissances 9A-9H spécifiques, et en particulier obtenues par emboutissage comme dans les exemples illustrés aux figures. Il est par exemple tout à fait envisageable que les excroissances 9A-9H de couvercle soient formées par des languettes plates obtenues par repliement localisé vers l'intérieur du bord libre de la ceinture annulaire 5B. Le recours à un élément en volume est toutefois préféré, car il permet d'obtenir aisément, par simple déformation de matière (emboutissage ou autre) une excroissance qui présente d'excellentes propriétés mécaniques et des dimensions réduites. Grâce à ces dimensions réduites, il est possible de faire passer l'appareil 1 de la configuration d'attente de verrouillage (position de pré-verrouillage du couvercle 5 relativement à la cuve 2) à la configuration de verrouillage (position de verrouillage du couvercle 5 relativement à la cuve 2) par rotation relative du couvercle 5 et de la cuve 2 selon une course angulaire prédéterminée α relativement faible, préférentiellement inférieure à 30°, par exemple comprise entre 10° et 25°, étant entendu que l'invention n'est pas limitée à une valeur de course angulaire α particulière, laquelle peut être supérieure ou égal à 30°, ou au contraire nettement inférieure à 30°.

Dans les exemples illustrés aux figures, les excroissances 10A-10H de cuve sont formées par un rebord annulaire qui déborde vers l'extérieur à partir du bord supérieur libre 2C, des encoches 11A-11H étant ménagées à travers ledit rebord annulaire de façon à permettre le passage desdites excroissances 9A-9H de couvercle, de sorte que les portions dudit rebord annulaire qui s'étendent entre chaque encoche 11A-11H forment les rampes de cuve respectives destinées à coopérer avec les excroissances 9A-9H de couvercle qui forment les rampes de couvercle. Ainsi, lorsque le couvercle 5 vient coiffer la cuve 2, les excroissances 9A-9H de couvercle peuvent passer par les encoches 11A-11H pour se retrouver plus bas que le rebord annulaire. L'appareil 1 se trouve alors dans sa configuration de pré-verrouillage (également appelée configuration d'attente de verrouillage), à partir de laquelle la configuration de verrouillage peut être atteinte en faisant simplement tourner le couvercle 5 relativement à la cuve 2 selon la course angulaire α prédéterminée autour de l'axe vertical X-X', ce qui a pour effet de décaler angulairement les excroissances 9A-9H du couvercle 5 et les encoches 11A-11H du rebord annulaire, réalisant un verrouillage de type « *à baïonnette* ».

Conformément à l'invention, l'appareil 1 comprend également un élément de sécurité 12 fixé au couvercle 5 pour se déplacer avec ce dernier à pivotement relativement à la cuve 2, en l'espèce selon ladite course angulaire α prédéterminée. En d'autres termes, l'élément de sécurité 12 est embarqué sur le couvercle 5 de façon à former avec ce dernier un sous-ensemble unitaire. La fixation de l'élément de sécurité 12 au couvercle 5 est assurée par des moyens permettant d'immobiliser en position l'élément de sécurité 12 relativement au couvercle 5. Ainsi, lors du pivotement du couvercle 5 relativement à la cuve 2 selon la course angulaire α pour passer de la position prédéterminée de pré-verrouillage à la position prédéterminée de verrouillage, l'élément de sécurité 12, du fait qu'il est porté par le couvercle 5, subit également un pivotement selon la même course angulaire a. Dans les exemples illustrés aux figures, l'élément de sécurité 12 est disposé sur l'élément de couverture discoïde 5A, à la périphérie de ce dernier.

De préférence, lesdits éléments de sécurité 12 et poignées de cuve 3 sont au moins partiellement en correspondance radiale (en l'espèce relativement à l'axe central X-X') non seulement lorsque le couvercle 5 occupe ladite position prédéterminée de verrouillage, mais également lorsqu'il occupe ladite position prédéterminée de pré-verrouillage. Ainsi, de préférence, l'élément de sécurité 12 se trouve toujours au moins en partie en alignement radial avec la poignée de cuve 3 tout au long de la course angulaire α prédéterminée du couvercle 5 entre ses positions de pré-verrouillage et de verrouillage. Le recours à une course angulaire α d'amplitude réduite, par exemple inférieure à 30° comme exposé ci-avant, s'avère particulièrement avantageux en permettant de minimiser l'amplitude du secteur angulaire selon lequel s'étend la poignée de cuve 3, c'est-à-dire de minimiser la largeur L de ladite poignée de cuve 3.

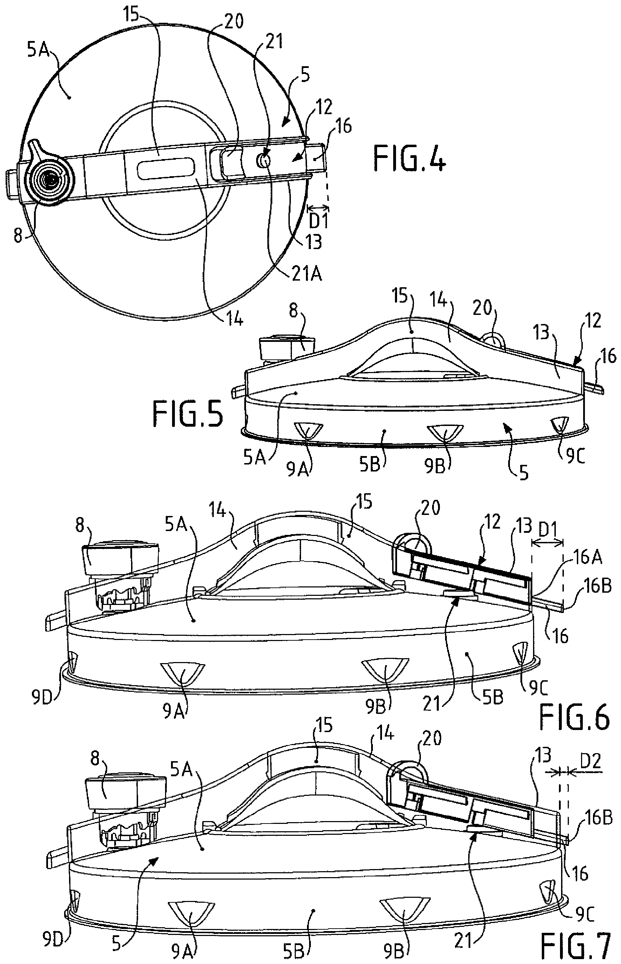

Conformément à l'invention, l'élément de sécurité 12 comprend un verrou 16 monté mobile radialement relativement au couvercle 5 entre :
- d'une part une position déployée (illustrée par exemple aux figures 1 et 16) dans laquelle ledit verrou 16 déborde radialement dudit couvercle 5, en l'espèce de façon visible, de façon à faire saillie radialement vers l'extérieur de ce dernier,
- et d'autre part une position escamotée (illustrée par exemple aux figures 7 et 20) dans laquelle ledit verrou 16 est rétracté vers l'intérieur du couvercle 5, de façon soit à ne plus déborder radialement vers l'extérieur du couvercle 5, soit à toujours déborder radialement vers l'extérieur dudit couvercle 5, mais de façon moindre que dans la position déployée.

En d'autres termes, dans la position déployée la distance entre le centre du couvercle 5 et l'extrémité extérieure libre 16B du verrou 16 est supérieure à la distance entre le centre du couvercle 5 et l'extrémité extérieure libre 16B du verrou 16 lorsque ce dernier est en position escamotée.

L'appareil 1 selon l'invention est conçu de façon que dans l'une desdites positions déployée et escamotée, ledit verrou 16 engage, lorsque ledit système de verrouillage est en configuration de verrouillage, une conformation complémentaire 17 de verrouillage portée par la cuve 2, tandis que dans l'autre desdites positions déployée et escamotée, ledit verrou 16 se dégage de ladite conformation complémentaire 17 de verrouillage.

L'invention concerne donc un premier cas de figure, correspondant au premier mode de réalisation des figures 1 à 15, dans lequel le verrou 16 est monté mobile radialement relativement audit couvercle 5 entre :
- une position déployée dans laquelle le verrou 16 déborde radialement du couvercle 5 pour engager, lorsque le système de verrouillage est en configuration de verrouillage, ladite conformation complémentaire 17 de verrouillage portée par la cuve 2,
- et une position escamotée dans laquelle le verrou 16 est rétracté vers l'intérieur du couvercle 5 pour se dégager de ladite conformation complémentaire 17 de verrouillage.

L'invention couvre également au moins un deuxième cas de figure, correspondant à la variante des figures 16 à 21, selon laquelle le verrou 16 est monté mobile radialement relativement audit couvercle entre :
- une position escamotée dans laquelle ledit verrou 16 est rétracté vers l'intérieur du couvercle 5 pour engager, lorsque le système de verrouillage est en configuration de verrouillage, ladite conformation complémentaire 17 de verrouillage portée par la cuve 2,
- et une position déployée dans laquelle ledit verrou 16 déborde radialement du couvercle 5 pour se dégager de ladite conformation complémentaire 17 de verrouillage.

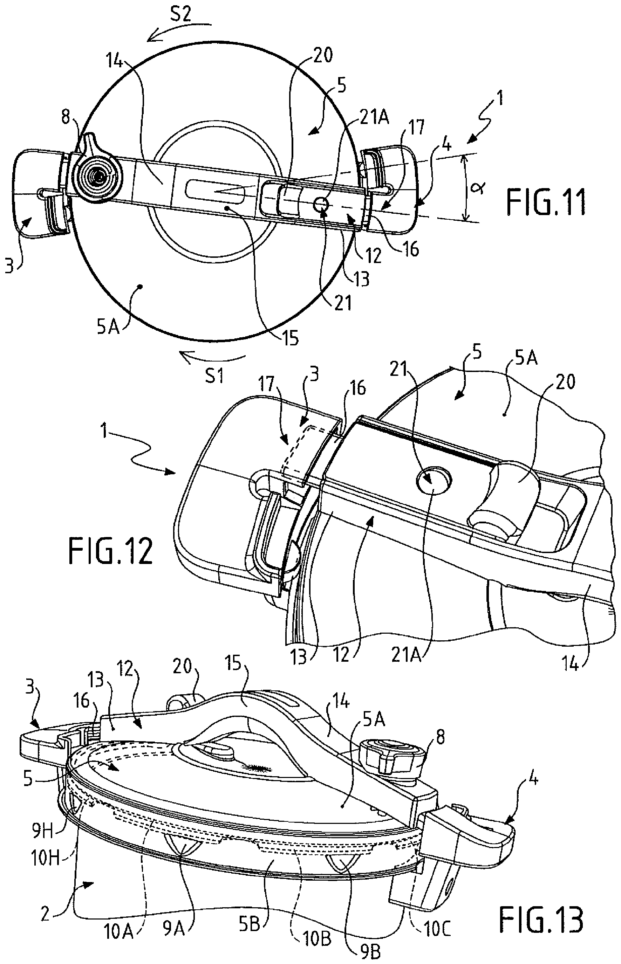

De préférence, ledit engagement, par le verrou 16, de la conformation complémentaire 17 est un engagement d'interverrouillage, et de préférence d'interverrouillage angulaire dans le plan horizontal perpendiculaire à l'axe central X-X', destiné à empêcher le couvercle 5 de pivoter relativement à la cuve 2 pour retourner, à partir de sa position prédéterminée de verrouillage, dans sa position de pré-verrouillage. Ainsi, lorsque le verrou 16 engage, dans sa position déployée (variante des figures 11 et 12) ou dans sa position escamotée (variante des figures 20 et 21) et alors que le couvercle 5 se trouve dans sa position de pré-verrouillage, la conformation complémentaire 17, lesdits verrou 16 et conformation complémentaire 17 s'attachent l'un à l'autre afin de limiter ainsi leur faculté de déplacement relatif. À l'inverse, dans la position escamotée (variante des figures 11 et 12) ou dans la position déployée (variantes des figures 20 et 21), le verrou 16 se trouve éloigné de la conformation complémentaire au point de ne plus interagir avec cette dernière, autorisant ainsi le couvercle 5 à pivoter relativement à la cuve 2 pour retourner, à partir de sa position prédéterminée de verrouillage, dans sa position de pré-verrouillage.

Grâce à cette conception particulière retenue dans le cadre de l'invention, l'utilisateur peut aisément identifier la pièce mécanique qui assure l'interverrouillage (c'est-à-dire le verrou 16) puisqu'elle fait saillie radialement du couvercle 5 au moins lorsqu'elle occupe sa position déployée. L'utilisateur peut également aisément identifier si ledit verrou 16 est en situation de verrouillage ou de déverrouillage puisque selon la position dudit verrou 16, ce dernier déborde plus ou moins radialement du couvercle 5. Afin de faciliter encore plus l'utilisation, il est par exemple envisageable qu'une portion du verrou 16 soit colorée d'une couleur spécifique (par exemple la couleur rouge) et que cette portion colorée ne devienne apparente aux yeux de l'utilisateur que lorsque le verrou 16 se trouve soit dans sa position déployée soit dans sa position rétractée.

Avantageusement, l'extension radiale formé par le verrou 16, notamment lorsqu'il se trouve en position déployée, sert à faciliter le positionnement du couvercle 5 dans sa position de pré-verrouillage relativement à la cuve. Pour cela, la poignée de cuve 3 présente avantageusement une conformation d'accueil 30 destinée à recevoir au moins partiellement le verrou 16. Par exemple, conformément à la variante de réalisation des figures 1 à 15, la conformation d'accueil 30 se présente sous la forme d'une cavité de forme sensiblement conjuguée à celle d'une portion extrémale libre du verrou 16. L'utilisateur comprend ainsi intuitivement que la portion extrémale en question doit venir se loger dans ladite cavité ménagée au sommet de la poignée de cuve 3, positionnant ainsi naturellement le couvercle 5 dans sa position de pré-verrouillage. Le verrou 16 joue ainsi un double rôle d'interverrouillage et d'indexation en position.

De préférence, la poignée de cuve 3 porte ladite conformation complémentaire 17 de verrouillage, comme illustré aux figures. Il est cependant tout à fait envisageable que la conformation complémentaire 17 ne soit pas portée par la poignée de cuve 3 mais soit solidaire directement de la cuve 2. De préférence, la coopération d'interverrouillage entre le verrou 16 et la conformation complémentaire 17 est une coopération mâle/femelle, le verrou 16 et la conformation complémentaire 17 formant respectivement une conformation mâle et une conformation femelle complémentaires, ou inversement. Dans le premier mode de réalisation des figures 1 à 15, la poignée de cuve 3 forme un logement, c'est-à-dire une cavité, qui constitue la conformation complémentaire 17. Le logement en question est destiné à recevoir en son sein l'extrémité extérieure libre 16B du verrou 16 lorsque lesdits verrou 16 et couvercle 5 occupent respectivement lesdites position déployée et position prédéterminée de verrouillage. Ainsi, dans la configuration de verrouillage de l'appareil 1 des figures 1 à 15, une portion extrêmale libre du verrou 16 est capturée dans le logement solidaire de la poignée de cuve 3 pour empêcher tout retour intempestif du couvercle 5 dans sa position prédéterminée de déverrouillage à partir de sa position prédéterminée de verrouillage. À l'inverse, dans le deuxième mode réalisation des figures 16 à 21, la conformation complémentaire 17 forme cette fois non pas un logement mais une protubérance de blocage qui fait saillie à la surface de la poignée de cuve 3. Dans ce cas, la poignée de cuve 3 présente par exemple une surface supérieure sensiblement plane pourvue d'un ergot qui s'élève verticalement à partir de ladite surface plane pour former ladite protubérance de blocage. Dans ce mode de réalisation, le verrou 16 forme quant à lui un logement 18 destiné à recevoir la protubérance de blocage lorsque lesdits verrous 16 et couvercle 5 occupent respectivement lesdites position rétractée et position prédéterminée de verrouillage.

Ainsi, une fois le couvercle 5 en position prédéterminée de verrouillage avec le verrou 16 qui engage la conformation complémentaire 17 (dans sa position déployée - figure 1, ou dans sa position rétractée - figure 20) il est impossible pour l'utilisateur, du fait de la coopération mécanique du verrou 16 avec la conformation complémentaire 17, de faire pivoter le couvercle 5 pour qu'il quitte sa position prédéterminée de verrouillage et retourne à sa position prédéterminée de pré-verrouillage. Cela permet d'éviter toute tentative de déverrouillage intempestif qui pourrait mettre en danger l'utilisateur.

Comme illustré, l'élément de sécurité 12 comprend un corps principal 13 attaché de façon fixe au couvercle 5, ledit verrou 16 étant monté mobile relativement audit corps principal 13 entre ses positions déployée et escamotée. Comme illustré, le verrou 16 déborde radialement non seulement du couvercle 5, mais également du corps principal 13, y compris lorsque ce dernier déborde lui-même radialement du couvercle 5. Comme illustré, le verrou 16 en position déployée déborde radialement à la fois du couvercle 5 et du corps principal 13 de façon visible, de sorte que l'utilisateur peut voir dépasser le verrou 16 du sous-ensemble formé par le couvercle 5 et le corps principal 13. Dans sa position déployée, le verrou 16 s'étend longitudinalement entre une extrémité intérieure 16A au contact du corps principal 13 et une extrémité extérieure libre 16B qui fait avantageusement saillie radialement, de préférence de manière visible, à la fois du corps principal 13 et du couvercle 5. En d'autres termes, l'extrémité libre 16B se trouve, lorsque le verrou 16 est en position déployée, en dehors du corps principal 13. Dans les modes de réalisation préférentiels illustrés aux figures, le corps principal 13 est directement relié au couvercle 5 de façon à être immobilisé relativement à ce dernier, au moyen par exemple d'une liaison de type encastrement. Dans le premier mode de réalisation illustré aux figures 1 à 15, le corps principal 13 se présente sous la forme d'une portion extrêmale d'une traverse 14 en matière plastique qui recouvre localement l'élément de couverture discoïde 5A selon un diamètre de ce dernier. La traverse 14 en question s'étend ainsi longitudinalement entre deux extrémités diamétralement opposées qui affleurent sensiblement le bord du couvercle 5, de préférence sans déborder radialement de ce dernier. Dans le deuxième mode de réalisation des figures 16 à 21, le corps principal 13 est cette fois formé non pas par une traverse qui s'étend sur tout un diamètre du couvercle 5 sans déborder radialement de ce dernier, mais en l'espèce par un bloc distinct du couvercle 5 et disposé à la périphérie du couvercle 5, sur l'élément de couverture discoïde 5A, ledit bloc débordant radialement vers l'extérieur du couvercle 5 comme cela est en particulier visible à la figure 18. Le bloc formant le corps principal 13 de l'appareil des figures 16 à 21 est réalisé, tout comme la traverse 14, de préférence en matière plastique, et est attaché de façon fixe à l'élément de couverture discoïde 5A.

Avantageusement, l'appareil 1 comprend également un organe de préhension 15 qui est attaché de façon fixe au couvercle 5 et est conçu pour être saisi manuellement afin de permettre la manipulation et le transport du couvercle 5 par son intermédiaire, et en particulier le pivotement du couvercle 5 relativement à la cuve 2 selon ladite course angulaire α prédéterminée. De préférence, et conformément au premier mode de réalisation des figures 1 à 15, le corps principal 13 vient de matière avec ledit organe de préhension 15. Plus précisément, dans le mode de réalisation illustré aux figures 1 à 15, la traverse 14 présente une conformation incurvée en son centre destinée à former l'organe de préhension 15, lequel forme donc, avec le corps principal 13 (qui correspond à l'une des extrémités de la traverse 14), une seule et même pièce d'un seul tenant. Il est cependant parfaitement envisageable, sans pour autant que l'on sorte du cadre de l'invention, que l'organe de préhension 15 soit totalement distinct du corps principal 13, conformément par exemple au mode de réalisation des figures 16 à 21. Dans ce mode de réalisation, l'organe de préhension 15 est formé par un pommeau central qui s'élève sensiblement à partir du centre de l'élément de couverture discoïde 5A et qui est totalement distinct et indépendant du corps principal 13.

Avantageusement, le verrou 16 est monté à coulissement, et de façon encore plus préférentielle à coulissement radial, relativement au couvercle 5, conformément aux modes de réalisation illustrés aux figures, étant entendu que l'invention n'est toutefois pas limitée à un montage à coulissement et que d'autres types de liaison mécanique (à pivotement par exemple) peuvent être mis en oeuvre entre le couvercle 5 et le verrou 16. Conformément au premier mode de réalisation illustré aux figures 1 à 15, dans sa position déployée, le verrou 16 s'étend longitudinalement entre une extrémité intérieure 16A au contact du corps principal 13 et une extrémité extérieure libre 16B, ladite conformation complémentaire 17 formant dans ce cas comme décrit précédemment un logement destiné à recevoir en son sein ladite extrémité extérieure libre 16B, selon une configuration en emboîtement qui assure l'interverrouillage recherché. À cette fin, l'extrémité extérieure libre 16B est suffisamment écartée du centre du couvercle 5 pour venir coopérer avec le logement en question.

Ainsi, dans le premier mode de réalisation illustré aux figures 1 à 15, le verrou 16 se présente sous la forme d'une languette qui, dans la position déployée, fait saillie radialement sur une distance D1 à partir du couvercle 5 (cf. figures 4 et 6) tandis que dans la position rétractée ladite languette ne fait soit sensiblement pas saillie radialement vers l'extérieur du couvercle 5, soit fait saillie radialement vers l'extérieur du couvercle 5 sur une distance D2 qui est inférieure à la distance D1 (figure 7). Dans le deuxième mode de réalisation des figures 16 à 21, le verrou 16 se présente avantageusement sous la forme d'un curseur en forme de plaquette monté mobile entre une position rétractée dans laquelle le curseur en question ne déborde sensiblement pas radialement vers l'extérieur du corps principal 13, et une position déployée dans laquelle il déborde au contraire radialement vers l'extérieur dudit corps principal 13.

Il existe bien entendu une multitude de possibilités pour contrôler la position du verrou 16, qu'il s'agisse d'un contrôle purement manuel, semi-automatique ou totalement automatique. Par exemple, l'élément de sécurité 12 comprend un moyen de rappel élastique 19 interposé entre lesdits corps principal 13 et verrou 16 pour rappeler en permanence le verrou 16 dans sa position déployée, ou pour rappeler en permanence ledit verrou 16 dans sa position escamotée. De préférence, ledit moyen de rappel élastique 19 comprend un ressort hélicoïdal, étant entendu que l'invention n'est pas limitée à un moyen de rappel élastique particulier et que tout corps élastique approprié peut convenir en fonction de la conception retenue. Dans un mode de réalisation préférentiel, le verrou 16 tend à occuper sa position déployée en permanence sous l'effet du rappel élastique auquel il est soumis, et rejoint sa position escamotée par exemple sous l'effet de l'exercice par l'utilisateur d'un effort de commande direct opposé à la force de rappel élastique. Avantageusement, l'élément de sécurité 12 comprend un organe de commande 20 porté par le couvercle 5 et déplaçable manuellement relativement à ce dernier pour commander manuellement le déplacement du verrou 16 de sa position déployée à sa position escamotée et/ou de sa position escamotée à sa position déployée.

L'organe de commande 20 est par exemple porté par le corps principal 13 et de préférence monté à coulissement relativement à ce dernier. De préférence, l'organe de commande 20 est directement solidaire du verrou 16, et porte avantageusement ce dernier comme dans le mode de réalisation illustré aux figures 1 à 15 selon lequel l'organe de commande 20 et le verrou 16 sont formés par une seule et même pièce d'un seul tenant. Dans ce cas, l'organe de commande 20 peut être utilisé par l'utilisateur pour repousser le verrou 16 dans sa position escamotée, à l'encontre de la force de rappel élastique exercé par le moyen de rappel élastique 19. Le fonctionnement de cette variante de l'appareil 1 peut par exemple être le suivant :
- Le verrou 16 se trouve naturellement en position déployée sous l'effet de la force de rappel exercée par le ressort formant le moyen de rappel 19.
- Le couvercle 5 est placé dans sa position prédéterminée de pré-verrouillage, le verrou 16 occupant sa position déployée et surplombant au moins partiellement la poignée de cuve 3 en étant reçu dans la cavité 30.
- Puis l'utilisateur fait pivoter, au moyen de l'organe de préhension 15, le couvercle 5 de sa position prédéterminée de pré-verrouillage à sa position prédéterminée de verrouillage tout en exerçant, lorsque le couvercle 5 arrive au voisinage de sa position de pré-verrouillage, un effort de commande sur l'organe de commande 20 pour commander manuellement le déplacement du verrou 16 dans sa position escamotée afin d'amener le couvercle 5 jusque dans sa position de verrouillage sans que le verrou 16 ne bloque le mouvement en venant buter contre la paroi latérale du logement porté par la poignée de cuve 3.
- Une fois le couvercle 5 arrivé en position de verrouillage, l'utilisateur peut relâcher son effort sur l'organe de commande 20, ce qui entraînera le rappel élastique du verrou 16 dans sa position déployée, de sorte que la portion extrêmale libre du verrou 16 se retrouvera capturée dans le logement formant conformation complémentaire 17 de verrouillage porté par la poignée de cuve 3.
- Par la suite, pour déverrouiller le couvercle 5 si les conditions de sécurité (niveau de pression) le permettent, l'utilisateur exercera tout d'abord un effort sur l'organe de commande 20 pour ramener le verrou 16 dans sa position escamotée à l'encontre de la force de rappel élastique exercé par le moyen 19, puis décalera angulairement, grâce à l'organe de préhension 15, le couvercle 5 hors de sa position prédéterminée de verrouillage.

L'invention n'est toutefois pas limitée à ce mode de réalisation particulier. Il est par exemple tout à fait envisageable, sans pour autant que l'on sorte du cadre de l'invention, que l'élément de sécurité 12 n'inclut pas de moyen de rappel élastique 19, auquel cas l'organe de commande 20 peut être utilisé pour déplacer le verrou 16 de sa position déployée à sa position escamotée et de sa position escamotée à sa position déployée (alors que dans le mode de réalisation des figures 1 à 15 l'organe de commande 20 n'assure pas directement le déplacement du verrou 16 de sa position escamotée à sa position déployée, ce déplacement étant plus directement assuré par le moyen de rappel élastique 19). Il est également parfaitement envisageable, sans pour autant que l'on sorte du cadre de l'invention, que le verrou 16 ne soit pas directement porté par l'organe de commande 20, comme dans l'exemple des figures 1 à 15, mais que l'organe de commande 20 soit déplaçable manuellement non seulement relativement au corps principal 13, mais également relativement au verrou 16, lequel peut être dans ce cas avantageusement soumis directement à l'effort de rappel élastique exercé par le moyen de rappel élastique 19. Dans ce dernier mode de réalisation particulier, l'élément de sécurité 12 peut inclure un organe de blocage qui bloque le verrou 16 dans sa position escamotée, à l'encontre de la force de rappel exercée par le moyen de rappel élastique 19. Dans ce cas, l'organe de commande 20 est utilisé pour déplacer le moyen de blocage en question afin qu'il s'efface et permette ainsi au verrou 16 de regagner automatiquement, sous l'effet de l'effort de rappel élastique, sa position déployée. Il est par ailleurs envisageable que le moyen de rappel élastique rappelle le verrou 16 non pas dans sa position déployée mais plutôt dans sa position escamotée, l'ensemble des variantes alternatives envisagées ci-avant restant applicables *mutatis mutandis.*

Dans le mode de réalisation des figures 16 à 21, l'organe de commande 20 permet par exemple non seulement de commander manuellement le déplacement du verrou 16 de sa position escamotée à sa position déployée mais il permet avantageusement également de commander le déplacement du verrou 16 de sa position déployée à sa position escamotée. Il est également tout à fait envisageable dans ce mode de réalisation de mettre en oeuvre un moyen de rappel élastique interposé entre les corps principal 13 et verrou 16 pour rappeler en permanence le verrou 16 soit dans sa position escamotée, soit dans sa position déployée. Toutes les variantes envisagées précédemment en relation avec le premier mode de réalisation des figures 1 à 15 sont là encore tout à fait applicables, *mutatis mutandis,* à ce deuxième mode de réalisation des figures 16 à 21.

Il est par ailleurs envisageable que le passage du couvercle 5 de sa position prédéterminée de pré-verrouillage à sa position prédéterminée de verrouillage entraîne automatiquement et provisoirement le verrou 16 dans sa position déployée et/ou dans sa position escamotée. Par exemple, dans le premier mode de réalisation des figures 1 à 15, la poignée de couvercle 3 peut-être avantageusement pourvu d'une surface de came qui vient coopérer avec une surface de came complémentaire du verrou 16 pour que ce dernier soit repoussé dans sa position escamotée sous l'effet de la rotation du couvercle 5 de sa position prédéterminée de pré-verrouillage vers sa position prédéterminée de verrouillage, le verrou 16 revenant automatiquement, sous l'effet du moyen de rappel élastique 19, dans sa position déployée une fois passée la surface de came de la poignée de cuve 3, de façon à se retrouver capturé dans le logement formant conformation complémentaire 17.

L'inverse n'est en revanche pas possible et l'utilisateur doit exercer un effort positif sur l'organe de commande 20 pour déverrouiller le couvercle 5. Dans le mode de réalisation des figures 16 à 21, le verrou 16 est par exemple repoussé en permanence dans sa position déployée sous l'effet du rappel élastique auquel il est en permanence soumis. La poignée de cuve 3 est avantageusement pourvue d'une surface de came conçue pour coopérer avec une surface de came complémentaire portée par le verrou 16 pour repousser ce dernier, sous l'effet du pivotement du couvercle 5 de sa position prédéterminée de pré-verrouillage à sa position préterminée de verrouillage, dans sa position escamotée où le logement 18 portée par le verrou 16 peut venir capturer la protubérance formant conformation complémentaire 17 portée par la poignée de cuve 3. Il est également possible, dans ce mode de réalisation des figures 16 à 21, que le verrou 16 soit soumis en permanence à une force de rappel élastique qui a tendance à le maintenir dans sa position escamotée. Dans ce cas, l'élément de sécurité 12 peut comprendre avantageusement un organe de blocage déplaçable entre une position de blocage dans laquelle le moyen de blocage maintient le verrou 16 dans sa position déployée à l'encontre de la force de rappel élastique, et une position de libération dans laquelle le moyen de blocage s'efface pour laisser le verrou 16 retourner dans sa position escamotée sous l'effet de la force de rappel élastique. L'organe de commande 20 commande avantageusement dans ce cas le passage de l'organe de blocage de sa position de blocage à sa position de libération. Il est également possible que le passage du moyen de blocage de sa position de blocage à sa position de libération soit commandé automatiquement par la coopération de surfaces de came portées respectivement par la poignée de cuve 3 et l'élément de sécurité 12, auquel cas l'organe de commande 20 peut cette fois être utilisé pour réarmer le mécanisme, c'est-à-dire repousser le verrou 16 dans sa position déployée, si bien entendu les conditions de sécurité (niveau de pression) le permettent.

L'organe de commande 20 pourra se présenter sous toute forme appropriée, et pourra être de préférence montée à coulissement relativement au corps principal 13, que ce soit selon une direction radiale (mode de réalisation des figures 1 à 15) ou selon une direction tangentielle (mode de réalisation des figures 16 à 21). L'organe de commande 20 se présente par exemple sous la forme d'un poussoir, d'un levier, d'une tirette, d'un curseur, d'un bouton... ou tout autre conception appropriée.

De préférence, afin de procurer une sécurité d'utilisation optimale, l'appareil 1 comprend un moyen de sécurité à l'ouverture 21 susceptible d'évoluer, sous l'effet du niveau de pression régnant dans l'appareil 1 (c'est-à-dire dans l'enceinte de cuisson), entre une configuration de libération, dans laquelle il autorise le déverrouillage du couvercle 5 relativement à la cuve 2, et une configuration de blocage, dans laquelle il interdit le déverrouillage du couvercle 5 relativement à la cuve 2. A cette fin, le moyen de sécurité 21 comprend un élément 21A mobile entre :
- une position de sécurité dans laquelle il bloque le verrou 16 dans l'une desdites positions déployée et escamotée qui correspond à la position dans laquelle ledit verrou 16 engage la conformation complémentaire 17
- et une position neutre dans laquelle il n'interfère pas avec le verrou 16 pour autoriser ce dernier à atteindre l'autre desdites positions déployée et escamotée.

L'élément 21A est avantageusement embarqué au sein du corps principal 13. De préférence, la position neutre est une position de fuite dans laquelle le moyen de sécurité 21 met en communication l'intérieur de l'enceinte avec l'extérieur, tandis que la position de blocage est une position étanche dans laquelle le moyen de sécurité 21 ne met pas en communication l'intérieur de l'enceinte de cuisson avec l'extérieur ce qui permet la montée en pression de l'enceinte. Par exemple, l'élément 21A est monté à coulissement vertical entre une position haute (correspondant à la position de sécurité) dans laquelle il est repoussé dès lors que la pression au sein de l'appareil 1 atteint un niveau prédéterminé, et une position basse (correspondant à la position neutre) dans laquelle il est maintenu sous l'effet de son propre poids, tant que la pression au sein de l'appareil 1 n'atteint pas ledit niveau prédéterminé. De préférence, dans sa position haute, l'élément 21A, qui se présente par exemple sous la forme d'un doigt de sécurité, est capable de coopérer, directement ou indirectement, avec le verrou 16 pour empêcher ce dernier de quitter sa position déployée ou escamotée dans laquelle il engage la conformation complémentaire 17. Par exemple, dans le mode de réalisation des figures 1 à 15, le doigt 21A, lorsqu'il est en position haute, vient se loger dans une conformation complémentaire de l'organe de commande 20 qui porte le verrou 16, empêchant ainsi le déplacement de l'organe de commande 20 et donc du verrou 16. Il est cependant tout à fait envisageable, sans pour autant que l'on sorte du cadre de l'invention, que le doigt de sécurité 21A coopère directement avec le verrou 16.

Une lumière est par ailleurs avantageusement ménagée dans le corps de l'organe de commande 20, afin que le sommet du doigt de sécurité 21A soit visible lorsqu'il est en position haute, permettant ainsi d'indiquer visuellement à l'utilisateur l'état de fonctionnement de l'appareil 1. Le moyen de sécurité 21 forme ainsi un moyen de sécurité à l'ouverture, qui empêche toute ouverture intempestive lorsque l'appareil 1 est sous pression.

Avantageusement, lorsque le verrou 16 se trouve dans sa position (déployée ou escamotée) d'engagement de ladite conformation complémentaire 17, il coopère avec le moyen de sécurité 21 pour empêcher ce dernier de rejoindre sa configuration de blocage à partir de sa configuration de libération. Cette fonctionnalité de sécurité à la mauvaise fermeture, qui empêche l'appareil 1 de monter en pression tant que le verrou 16 n'engage pas ladite conformation complémentaire 17, peut par exemple être mis en oeuvre au moyen d'un orifice ménagé à travers l'organe de commande 20 et dont les dimensions sont sensiblement ajustées à celle du doigt 21A, de telle sorte que lorsque l'orifice ne se trouve pas exactement au droit du doigt 21A, ce dernier vient en butée contre les bords de l'orifice en question ce qui l'empêche d'atteindre sa position de blocage.

## Revendications

1. Appareil de cuisson (1) d'aliments sous pression comportant une cuve (2), un couvercle (5) indépendant de la cuve (2), ainsi qu'un système de verrouillage à baïonnette conçu pour passer d'une configuration de déverrouillage à une configuration de verrouillage par pivotement du couvercle (5) relativement à la cuve (2), ledit appareil (1) comprenant également un élément de sécurité (12) fixé au couvercle pour se déplacer avec ce dernier à pivotement relativement à la cuve (2), ledit appareil (1) étant **caractérisé en ce que** ledit élément de sécurité (12) comprend un corps principal (13) attaché de façon fixe au couvercle (5), ainsi qu'un verrou (16) monté mobile radialement relativement audit corps principal (13) entre d'une part une position déployée dans laquelle ledit verrou (16) déborde radialement à la fois dudit couvercle (5) et dudit corps principal (13) et d'autre part une position escamotée dans laquelle ledit verrou (16) est rétracté vers l'intérieur du couvercle (5), de façon que dans l'une desdites positions déployée et escamotée, ledit verrou (16) engage, lorsque ledit système de verrouillage est en configuration de verrouillage, une conformation complémentaire (17) de verrouillage portée par la cuve (2), tandis que dans l'autre desdites positions déployée et escamotée, ledit verrou (16) se dégage de ladite conformation complémentaire (17) de verrouillage.

2. Appareil (1) selon la revendication 1 **caractérisé en ce que** ledit élément de sécurité (12) comprend un moyen de rappel élastique (19) pour rappeler en permanence ledit verrou (16) dans sa position déployée ou dans sa position escamotée.

3. Appareil (1) selon la revendication 1 ou 2 **caractérisé en ce qu'**en position déployée, ledit verrou (16) déborde radialement de façon visible.

4. Appareil (1) selon l'une des revendications précédentes **caractérisé en ce que** ledit élément de sécurité (12) comprend un organe de commande (20) porté par le couvercle (5) et déplaçable manuellement relativement à ce dernier pour commander manuellement le déplacement du verrou (16) de sa position déployée à sa position escamotée et/ou de sa position escamotée à sa position déployée.

5. Appareil (1) selon la revendication 4 **caractérisé en ce que** ledit organe de commande (20) est porté par ledit corps principal (13) et monté à coulissement relativement à ce dernier.

6. Appareil (1) selon l'une des revendications 1 à 5 **caractérisé en ce que** dans sa position déployée, ledit verrou (16) s'étend longitudinalement entre une extrémité intérieure (16A) au contact du corps principal (13) et une extrémité extérieure libre (16B), ladite extrémité extérieure libre (16B) faisant saillie radialement du corps principal (13) et du couvercle (5).

7. Appareil (1) selon la revendication précédente **caractérisé en ce que** ladite conformation complémentaire forme un logement destiné à recevoir en son sein ladite extrémité extérieure libre (16B).

8. Appareil (1) selon l'une des revendications précédentes **caractérisé en ce que** ladite cuve (2) est munie d'une poignée de cuve (3) qui forme une excroissance locale s'étendant radialement à partir de la cuve (2), et qui porte ladite conformation complémentaire (17) de verrouillage.

9. Appareil (1) selon la revendication 8 **caractérisé en ce que** ladite conformation complémentaire (17) forme une protubérance de blocage qui fait saillie à la surface de la poignée de cuve (3), ledit verrou (16) formant quant à lui un logement (18) destiné à recevoir ladite protubérance de blocage.

10. Appareil (1) selon l'une des revendications 8 et 9 **caractérisé en ce que** lorsqu'il occupe sa position déployée, ledit verrou (16) surplombe au moins partiellement ladite poignée de cuve (3) lorsque le couvercle (5) occupe ladite position prédéterminée de pré-verrouillage.

11. Appareil (1) selon l'une des revendications précédentes **caractérisé en ce que** ledit système de verrouillage est conçu pour passer de sa configuration de déverrouillage à sa configuration de verrouillage par pivotement du couvercle (5) relativement à la cuve (2) selon une course angulaire (a) prédéterminée à partir d'une position prédéterminée de pré-verrouillage du couvercle (5) relativement à la cuve (2), pour amener le couvercle (5) dans une position prédéterminée de verrouillage relativement à la cuve (2).

12. Appareil (1) selon l'une des revendications précédentes **caractérisé en ce qu'**il comprend un moyen de sécurité à l'ouverture (21) susceptible d'évoluer, sous l'effet du niveau de pression régnant dans l'appareil (1), entre une configuration de libération, dans laquelle il autorise le déverrouillage du couvercle (5) relativement à la cuve (2), et une configuration de blocage, dans laquelle il interdit le déverrouillage du couvercle (5) relativement à la cuve (2), ledit moyen de sécurité (21) comprenant un élément (21A) mobile entre d'une part une position de sécurité dans laquelle il bloque le verrou dans l'une desdites positions déployée et escamotée qui correspond à la position dans laquelle ledit verrou (16) engage la conformation complémentaire (17) et d'autre part une position neutre dans laquelle il n'interfère pas avec le verrou (16) pour autoriser ce dernier à atteindre l'autre desdites positions déployée et rétractée.

13. Appareil (1) selon l'une des revendications précédentes **caractérisé en ce qu'**il comprend un organe de préhension (15) qui est attaché de façon fixe au couvercle (5) et est conçu pour être saisi manuellement afin de permettre la manipulation et le transport du couvercle (5) par son intermédiaire.

14. Appareil (1) selon la revendication 13 **caractérisé en ce que** ledit corps principal (13) vient de matière avec ledit organe de préhension.

15. Appareil (1) selon l'une des revendications précédentes **caractérisé en ce qu'**il est conçu pour être soumis à une source de chauffe externe, comme par exemple une plaque de cuisson (15).

## Patentansprüche

1. Gerät (1) zum Garen von Nahrungsmitteln unter Druck, umfassend einen Behälter (2), einen Deckel (5), der von dem Behälter (2) unabhängig ist, und ein Bajonettverschluss-System, das ausgelegt ist, um durch Schwenken des Deckels (5) in Bezug auf den Behälter (2) von einer Entriegelungskonfiguration in eine Verriegelungskonfiguration überzugehen, wobei das Gerät (1) auch ein Sicherheitselement (12) aufweist, das an dem Deckel befestigt ist, um mit diesem Letzteren in Bezug auf den Behälter (2) schwenkbar bewegt zu werden, wobei das Gerät (1) **dadurch gekennzeichnet ist, dass** das Sicherheitselement (12) einen Hauptkörper (13), der fest an dem Deckel (5) angebracht ist, und einen Riegel (16) aufweist, der in Bezug auf den Hauptkörper (13) radial beweglich befestigt ist zwischen einerseits einer ausgefahrenen Position, in der der Riegel (16) radial gleichzeitig über den Deckel (5) und den Hauptkörper (13) hinausragt, und andererseits einer eingefahrenen Position, in der der Riegel (16) zum Inneren des Deckels (5) derart zurückgezogen ist, dass der Riegel (16) in einer der ausgefahrenen Position oder der eingefahrenen Position, wenn sich das System in der Verriegelungskonfiguration befindet, in einer komplementären Verriegelungskonformation (17), die von dem Behälter (2) getragen ist, einrasten kann, während sich der Riegel (16) in der anderen der ausgefahrenen Position oder der eingefahrenen Position aus der komplementären Verriegelungskonformation (17) löst.

2. Gerät (1) nach Anspruch 1, **dadurch gekennzeichnet, dass** das Sicherheitselement (12) ein elastisches Rückstellmittel (19) aufweist, um den Riegel (16) ständig in seine ausgefahrene Position oder in seine eingefahrene Position zurückzustellen.

3. Gerät (1) nach Anspruch 1 oder 2, **dadurch gekennzeichnet, dass** der Riegel (16) in der ausgefahrenen Position sichtbar hinausragt.

4. Gerät (1) nach einem der vorhergehenden Ansprüche, **dadurch gekennzeichnet, dass** das Sicherheitselement (12) ein Steuerorgan (20) aufweist, das von dem Deckel (5) getragen ist und in Bezug auf diesen Letzteren manuell verschiebbar ist, um das Verschieben des Riegels (16) von seiner ausgefahrenen Position in seine eingefahrene Position und/oder von seiner eingefahrenen Position in seine ausgefahrene Position manuell zu steuern.

5. Gerät (1) nach Anspruch 4, **dadurch gekennzeichnet, dass** das Steuerorgan (20) von dem Hauptkörper (13) getragen ist und in Bezug auf diesen Letzteren gleitend angebracht ist.

6. Gerät (1) nach einem der Ansprüche 1 bis 5, **dadurch gekennzeichnet, dass** sich der Riegel (16) in Längsrichtung zwischen einem inneren Ende (16A) in Kontakt mit dem Hauptkörper (13) und einem freien äußeren Ende (16B) erstreckt, wobei das freie äußere Ende (16B) radial von dem Hauptkörper (13) und dem Deckel (5) vorsteht.

7. Gerät (1) nach dem vorhergehenden Anspruch, **dadurch gekennzeichnet, dass** die komplementäre Konformation eine Aufnahme bildet, die dazu bestimmt ist, in sich das freie äußere Ende (16B) aufzunehmen.

8. Gerät (1) nach einem der vorhergehenden Ansprüche, **dadurch gekennzeichnet, dass** der Behälter (2) mit einem Behältergriff (3) versehen ist, der einen lokalen Vorsprung bildet, der sich von dem Behälter (2) radial erstreckt, und der die komplementäre Verriegelungskonformation (17) trägt.

9. Gerät (1) nach Anspruch 8, **dadurch gekennzeichnet, dass** die komplementäre Konformation (17) einen Blockiervorsprung bildet, der an der Oberfläche des Behältergriffs (3) vorsteht, wobei der Riegel (16) seinerseits eine Aufnahme (18) bildet, die dazu bestimmt ist, den Blockiervorsprung aufzunehmen.

10. Gerät (1) nach einem der Ansprüche 8 und 9, **dadurch gekennzeichnet, dass** der Riegel (16), wenn er seine ausgefahrene Position einnimmt, mindestens teilweise über den Behältergriff (3) hinausragt, wenn der Deckel (5) die vorbestimmte Vorverriegelungsposition einnimmt.

11. Gerät (1) nach einem der vorhergehenden Ansprüche, **dadurch gekennzeichnet, dass** das Verriegelungssystem ausgelegt ist, um durch Schwenken des Deckels (5) in Bezug auf den Behälter (2) gemäß einem vorbestimmten Winkelhub (a) aus einer vorbestimmten Vorverriegelungsposition des Deckels (5) in Bezug auf den Behälter (2) von seiner Entriegelungskonfiguration in seine Verriegelungskonfiguration überzugehen, um den Deckel (5) in eine vorbestimmte Verriegelungsposition in Bezug auf den Behälter (2) zu bringen.

12. Gerät (1) nach einem der vorhergehenden Ansprüche, **dadurch gekennzeichnet, dass** es ein Sicherheitsmittel beim Öffnen (21) aufweist, das sich unter der Wirkung des Druckniveaus, das in dem Gerät (1) herrscht, zwischen einer Freigabekonfiguration, in der es das Entriegeln des Deckels (5) in Bezug auf den Behälter (2) erlaubt, und einer Blockierkonfiguration, in der es das Entriegeln des Deckels (5) in Bezug auf den Behälter (2) untersagt, entwickeln kann, wobei das Sicherheitsmittel (21) ein bewegliches Element (21A) aufweist, das zwischen einerseits einer Sicherheitsposition, in der es den Riegel in einer der ausgefahrenen Position und der eingefahrenen Position blockiert, die der Position entspricht, in der der Riegel (16) in der komplementären Konformation (17) einrastet, und andererseits einer neutralen Position, in der es mit dem Riegel (16) nicht interferiert, um diesem Letzteren zu genehmigen, die andere der ausgefahrenen Position und der eingefahrenen Position zu erreichen, beweglich ist.

13. Gerät (1) nach einem der vorhergehenden Ansprüche, **dadurch gekennzeichnet, dass** es ein Greiforgan (15) aufweist, das fest an dem Deckel (5) angebracht ist und ausgelegt ist, um manuell ergriffen zu werden, um das Handhaben und das Transportieren des Deckels (5) durch dieses zu ermöglichen.

14. Gerät (1) nach Anspruch 13, **dadurch gekennzeichnet, dass** der Hauptkörper (13) werkstoffsmässig einstückig mit dem Greiforgan hergestellt ist.

15. Gerät (1) nach einem der vorhergehenden Ansprüche, **dadurch gekennzeichnet, dass** es ausgelegt ist, um einer äußeren Wärmequelle, wie beispielsweise einer Kochplatte (15), ausgesetzt zu werden.

## Claims

1. A food pressure cooking appliance (1) including a bowl (2), a lid (5) independent of the bowl (2), as well as a bayonet locking system designed to switch from an unlocking configuration to a locking configuration by swivelling of the lid (5) with respect to the bowl (2), said appliance (1) also comprising a safety element (12) fixed to the lid to swivelly move with the latter with respect to the bowl (2), said appliance (1) being **characterized in that** said safety element (12) comprises a main body (13) fixedly attached to the lid (5), as well as a lock (16) mounted radially mobile with respect to said main body (13) between, on the one hand, an extended position in which said lock (16) protrudes radially both from said lid (5) and from said main body (13), and on the other hand, a retracted position in which said lock (16) is retracted inside the lid (5), so that, in one of said extended and retracted positions, said lock (16), when said locking system is in the locking configuration, engages a complementary locking configuration (17) carried by the bowl (2), whereas, in the other of said extended and retracted positions, said lock (16) is disengaged from said complementary locking conformation (17).

2. The appliance (1) according to claim 1, **characterized in that** said safety element (12) comprises an elastic return means (19) to permanently return said lock (16) to its extended position or to its retracted position.

3. The appliance (1) according to claim 1 or 2, **characterized in that**, in the extended position, said lock (16) protrudes radially in a visible manner.

4. The appliance (1) according to one of the preceding claims, **characterized in that** said safety element (12) comprises a control member (20) carried by the lid (5) and that is manually moveable with respect to the latter to control manually the displacement of the lock (16) from its extended position to its retracted position and/or from its retracted position to its extended position.

5. The appliance (1) according to claim 4, **characterized in that** said control member (20) is carried by said main body (13) and mounted sliding with respect to the latter.

6. The appliance (1) according to one of claims 1 to 5, **characterized in that**, in its extended position, said lock (16) extends longitudinally between an inner end (16A) in contact with the main body (13) and a free outer end (16B), said free outer end (16B) protruding radially both from the main body (13) and from the lid (5).

7. The appliance (1) according to the preceding claims, **characterized in that** said complementary conformation forms an accommodation intended to receive within it said free outer end (16B).

8. The appliance (1) according to one of the preceding claims, **characterized in that** said bowl (2) is provided with a bowl handle (3) that forms a local protrusion extending radially from the bowl (2), and that carries said complementary locking conformation (17).

9. The appliance (1) according to claim 8, **characterized in that** said complementary conformation (17) forms a blocking protrusion that protrudes at the surface of the bowl handle (3), said lock (16) forming an accommodation (18) intended to receive said blocking protrusion.

10. The appliance (1) according to one of claims 8 and 9, **characterized in that**, when it occupies its extended position, said lock (16) overhangs at least partially said bowl handle (3) when the lid (5) occupies said predetermined pre-locking position.

11. The appliance (1) according to one of the preceding claims, **characterized in that** said locking system is designed to switch from its unlocking configuration to its locking configuration by swivelling of the lid (5) with respect to the bowl (2) according to a predetermined angular stroke (α) from a predetermined pre-locking position of the lid (5) with respect to the bowl (2), to bring the lid (5) to a predetermined locking position with respect to the bowl (2).

12. The appliance (1) according to one of the preceding claims, **characterized in that** it comprises an opening safety means (21) liable to evolve, under the effect of the pressure level inside the appliance (1), between a release configuration, in which it allows the unlocking of the lid (5) with respect to the bowl (2), and a blocking configuration, in which it forbids the unlocking of the lid (5) with respect to the bowl (2), said safety means (21) comprising an element (21A) mobile between, on the one hand, a safety position in which it blocks the lock in one of said extended and retracted positions that corresponds to the position in which said lock (16) engages the complementary conformation (17), and in the other hand, a neutral position in which it does not interfere with the lock (16) to allow the latter to reach the other of said extended and retracted positions.

13. The appliance (1) according to one of the preceding claims, **characterized in that** it comprises a gripping member (15) that is fixedly attached to the lid (5) and that is designed to be manually gripped in order to allow the handling and the transport of the lid (5) by means of it.

14. The appliance (1) according to claim 13, **characterized in that** said main body (13) is single-piece with said gripping member.

15. The appliance (1) according to one of the preceding claims, **characterized in that** it is designed to be subjected to an external heating source, as for example a cooking plate (15).
